# FASCICULE DE BREVET EUROPEEN

(11) **EP 3 156 311 B1**
(45) Date de publication et mention de la délivrance du brevet: **17.01.2018**
(21) Numéro de dépôt: 16193813.9
(22) Date de dépôt: 13.10.2016
(51) Int. Cl.: B62K 3/00, B62K 15/00

(54) **ENGIN À ROUES, NOTAMMENT POUR ENFANTS**
ROLLWAGEN, INSBESONDERE FÜR KINDER
WHEELED VEHICLE, NOTABLY FOR CHILDREN

(30) Priorité: 16.10.2015 FR 1559851
(43) Date de publication de la demande: 19.04.2017
(73) Titulaire: ID Development Limited, Tsim Sha Tsui (HK)
(72) Inventeur: Joseph, MAZOYER, 69110 SAINTE FOY LES LYON (FR)
(74) Mandataire: Jeannet, Olivier

(56) Documents cités:
- DE-A1-102012 204 909
- DE-U1-202013 100 380
- US-A1- 2003 011 159

## Description

La présente invention concerne un engin à roues, notamment pour enfants, utilisable principalement en tant que trottinette.

Comme cela est bien connu, un engin de type trottinette comprend essentiellement une plate-forme équipée de roues avant et arrière et une colonne de direction, commandant le pivotement de la ou des roues avant. D'une façon très générale, la colonne de direction est mobile entre une position de dépliage, dans laquelle elle fait saillie vers le haut depuis la plate-forme, en formant plus ou moins un angle droit avec celle-ci, et une position de repliage, dans laquelle elle s'étend le long de la plate-forme. D'une façon générale également, la mobilité de la colonne de direction entre ces positions de repliage et de dépliage est réalisée par montage pivotant de la colonne sur la plate-forme, autour d'un axe transversal à cette plate-forme, et le maintien de cette colonne dans l'une ou l'autre de ces positions de repliage et de dépliage est réalisé au moyen d'un mécanisme de verrouillage. Ce mécanisme est notamment du type comprenant deux parois adjacentes en secteur de cercle, pourvues d'encoches, et une broche transversale venant s'engager sélectivement dans une paire d'encoches dans chacune des deux positions précitées.

Un mécanisme de ce genre a pour inconvénient d'être relativement complexe à fabriquer, de présenter des parties exposées à l'encrassement et de présenter des parties risquant d'être relativement agressives en cas de chute.

La présente invention a pour objectif principal de remédier à cet inconvénient.

Ce mécanisme a également pour inconvénient de ne pas avoir un fonctionnement toujours très facile ou très intuitif pour un utilisateur.

La présente invention a aussi pour objectif de remédier à cet inconvénient.

Ce mécanisme a également pour inconvénient de ne permettre qu'une configuration unique de l'engin, en trottinette, et donc de ne pas permettre d'autres configurations possibles.

La présente invention a également pour objectif de remédier à cet inconvénient.

Le document DE 10 2012 204909 A1 décrit un engin à roues ne permettant pas de remédier aux inconvénients mentionnés plus haut.

L'engin concerné est, de manière connue en soi, équipé de roues avant et arrière et comprend une plate-forme formant un marchepied et une colonne de direction ; la colonne de direction est mobile entre une position de dépliage, dans laquelle elle fait saillie vers le haut depuis la plate-forme, et une position de repliage, dans laquelle elle s'étend le long de la plate-forme ; l'engin comprend un mécanisme de verrouillage de la colonne de direction dans lesdites positions de dépliage et de repliage.

Selon l'invention,
- la plate-forme comprend un puits de forme générale cylindrique dont l'axe est contenu dans un plan avant-arrière de la plate-forme et est incliné vers l'arrière de cette plate-forme en formant un angle de 30° à 60° avec le plan dans lequel s'étend le marchepied ;
- la colonne de direction présente une portion coudée inférieure, reliée à une embase cylindrique destinée à être engagée dans le puits avec capacité de pivotement dans ce puits, l'axe de cette embase formant, avec l'axe selon lequel s'étend longitudinalement le reste de la colonne de direction, un angle complémentaire à 180° avec l'angle que forme l'axe du puits ; et
- le mécanisme de verrouillage comprend des premiers moyens de blocage angulaire de l'embase dans le puits, dans la position angulaire de cette embase dans laquelle la colonne de direction est en position de dépliage, et des deuxièmes moyens de blocage angulaire de l'embase dans le puits, dans la position angulaire de cette embase dans laquelle la colonne de direction est en position de repliage.

Il sera compris que par l'expression "plan avant-arrière", on entend le plan longitudinal de la plate-forme qui est sensiblement perpendiculaire au plan dans lequel s'étend le marchepied que constitue la plate-forme, c'est-à-dire un plan parallèle à celui contenant l'axe des roues dans la position de dépliage.

Il sera également compris que les termes "avant" et "arrière" se réfèrent aux parties de l'engin situées respectivement vers l'avant et vers l'arrière de l'engin lorsque cet engin est utilisé pour se déplacer.

Ainsi, sur l'engin selon l'invention, la colonne de direction passe de la position de dépliage à la position de repliage par pivotement de ladite embase dans ledit puits, entre deux positions angulaires sensiblement diamétralement opposées ; les angles respectifs selon lequel le puits est incliné et selon lequel la colonne de direction est coudée permettent d'obtenir les positions respectives de dépliage et de repliage de cette colonne de direction.

L'engin a de cette façon une structure relativement simple, ne présente aucune partie exposée à l'encrassement, et ne comprend pas de parties risquant d'être relativement agressives en cas de chute. De plus, la manipulation de l'engin est très facile et très intuitive pour un utilisateur.

De préférence, l'angle que forme l'axe du puits avec le plan dans lequel s'étend le marchepied que constitue la plateforme est de 45°, et, par conséquent, l'angle que forme l'axe de l'embase avec l'axe selon lequel s'étend longitudinalement le reste de la colonne de direction est de 135°.

De préférence, l'engin comprend également un mécanisme de montage/démontage permettant le montage et le démontage de la colonne de direction par rapport à la plate-forme, ce mécanisme comprenant :
- une gorge aménagée dans la paroi de la plate-forme délimitant le puits, coaxialement à ce puits ;
- au moins une saillie radiale aménagée sur l'embase, apte à être engagée dans ladite gorge et à coulisser dans cette dernière lors du mouvement de la colonne de direction entre les positions précitées de dépliage et de repliage ; et
- une entrée permettant l'engagement de ladite saillie dans ladite gorge lors de l'engagement de l'embase dans le puits, cette entrée étant située à distance des positions angulaires qu'occupe l'embase dans le puits lorsque la colonne de direction est dans l'une ou l'autre des positions précitées de dépliage et de repliage.

Ainsi, lors du montage de la colonne de direction sur la plate-forme, l'embase est engagée dans le puits en étant orientée angulairement de telle sorte que ladite saillie vienne en regard de ladite entrée, puis cette saillie est engagée au travers de cette entrée jusque dans ladite gorge ; la colonne de direction est alors pivotée vers l'une ou l'autre desdites positions de dépliage et de repliage ce qui éloigne la saillie de l'entrée et permet ainsi la rétention de l'embase dans le puits, et donc le montage de la colonne de direction sur la plate-forme. Le démontage de la colonne de direction par rapport à la plate-forme s'opère de façon inverse.

Grâce à cette possibilité de démontage, l'engin peut être utilisé sans colonne de direction, pour former une sorte de planche à roulettes ; la plate-forme peut également être combinée à d'autres éléments, notamment à un siège amovible solidaire d'une embase apte à être engagée dans le puits et donc à être montée sur la plate-forme ; ce siège peut être chevauché par un enfant, de sorte que la plate-forme peut ainsi être transformée en une sorte de cheval à roulettes, ou, si le siège est relié à des poignées avant, en une sorte de "mini-moto".

Les premiers moyens de blocage et les deuxièmes moyens de blocage précités pourraient être formés par des pênes disposés radialement par rapport au puits et coulissant entre des positions d'engagement avec l'embase et de dégagement vis-à-vis de cette embase. Selon une forme de réalisation préférée de l'invention, toutefois,
- les premiers moyens de blocage angulaire de l'embase dans le puits sont constitués par :
   - un premier logement radial aménagé dans la plate-forme, débouchant dans le puits, et
   - un doigt de verrouillage mobile entre une position d'engagement dans ce premier logement, dans laquelle il verrouille la colonne de direction dans ladite position de dépliage, et une position de dégagement vis-à-vis de ce logement, dans laquelle il libère le pivotement de la colonne de direction ; le doigt de verrouillage est associé à un ressort le sollicitant dans ladite position d'engagement ;
- les deuxièmes moyens de blocage angulaire de l'embase dans le puits sont constitués par :
   - un deuxième logement radial aménagé dans la plate-forme à l'opposé du premier logement, débouchant dans le puits, et
   - le doigt de verrouillage, mobile radialement entre une position d'engagement dans ce deuxième logement, dans laquelle il verrouille la colonne de direction dans ladite position de repliage, et une position de dégagement vis-à-vis de ce logement, dans laquelle il libère le pivotement de la colonne de direction ;
- ladite gorge communique, au niveau de son fond, avec un troisième logement et un quatrième logement diamétralement opposés l'un par rapport à l'autre, ledit troisième logement étant apte à recevoir ladite saillie dans ladite position de dépliage et ledit quatrième logement étant apte à recevoir ladite saillie dans ladite position de repliage ;
l'embase étant apte à adopter deux positions axiales dans le puits, à savoir :
- une première position axiale, inférieure, dans laquelle ladite saillie est engagée dans l'un ou l'autre desdits troisième et quatrième logements et ledit doigt de verrouillage se situe au même niveau que ledit premier logement ou ledit deuxième logement, et
- une deuxième position axiale, supérieure, dans laquelle ladite saillie est dégagée de ce troisième ou quatrième logement et ledit doigt de verrouillage est décalé axialement par rapport audit premier logement et audit deuxième logement.

Ainsi, en position de dépliage de la colonne de direction, le doigt de verrouillage est engagé dans ledit premier logement par la force élastique que le ressort exerce sur lui, et ladite saillie est engagée dans ledit troisième logement ; pour passer de cette position de dépliage à la position de repliage, le doigt de verrouillage est amené en position de dégagement vis-à-vis du premier logement puis une traction est exercée sur l'embase de manière à extraire ladite saillie du troisième logement et à amener cette saillie dans la gorge ; la colonne de direction est alors apte à être pivotée vers ladite position de repliage ; lors de ce pivotement, elle est, à part le bref passage de ladite saillie en regard de l'entrée précitée, retenue par rapport à la plate-forme, ce qui prévient la séparation de la colonne de direction et de la plate-forme ; lorsque la position de repliage est atteinte, la saillie vient en regard du quatrième logement, ce qui permet à l'embase de retomber dans ladite première position axiale ; la saillie tombe donc dans le quatrième logement et le doigt de verrouillage vient en regard dudit deuxième logement, dans lequel il s'engage du fait de la sollicitation exercée par le ressort, ce qui verrouille la colonne de direction dans cette position de repliage.

De préférence, le doigt de verrouillage est solidaire d'un organe de verrouillage coudé, installé à l'intérieur de la partie inférieure de la colonne de direction, cet organe de verrouillage étant monté pivotant sur cette colonne de direction entre lesdites positions d'engagement et de dégagement du doigt de verrouillage, et présentant une partie d'actionnement accessible à un utilisateur, au travers d'une lumière aménagée dans la colonne de direction.

Une pression sur cette partie d'actionnement permet d'amener le doigt de verrouillage dans l'une ou l'autre des positions d'engagement ou de dégagement précitées, à l'encontre de la force élastique exercée sur ce doigt par le ressort.

L'invention sera bien comprise, et d'autres caractéristiques et avantages de celle-ci apparaîtront, en référence au dessin schématique annexé, décrit ci-après ; ce dessin représente, à titre d'exemple non limitatif, une forme de réalisation préférée de l'engin concerné. Dans ce dessin :
la figure 1 est une vue de l'engin en perspective, avec la colonne de direction en position de dépliage ;
la figure 2 en est une vue similaire à la figure 1, avec la colonne de direction en position de repliage ;
la figure 3 en est une vue partielle similaire à la figure 1, avec la colonne de direction dans un état de démontage par rapport à la plate-forme à roues que comprend l'engin ;
la figure 4 en est une vue partielle en perspective sous un autre angle, avec également la colonne de direction dans un état de démontage ;
la figure 5 en est une vue similaire à la figure 4, avec la colonne de direction en cours de montage sur la plate-forme ; et
les figures 6 à 11 en sont des vues partielles, de côté, en coupe longitudinale et à échelle agrandie, dans cinq positions différentes d'un mécanisme de montage de la colonne de direction sur la plate-forme et de commande du pivotement de cette colonne par rapport à cette plate-forme.

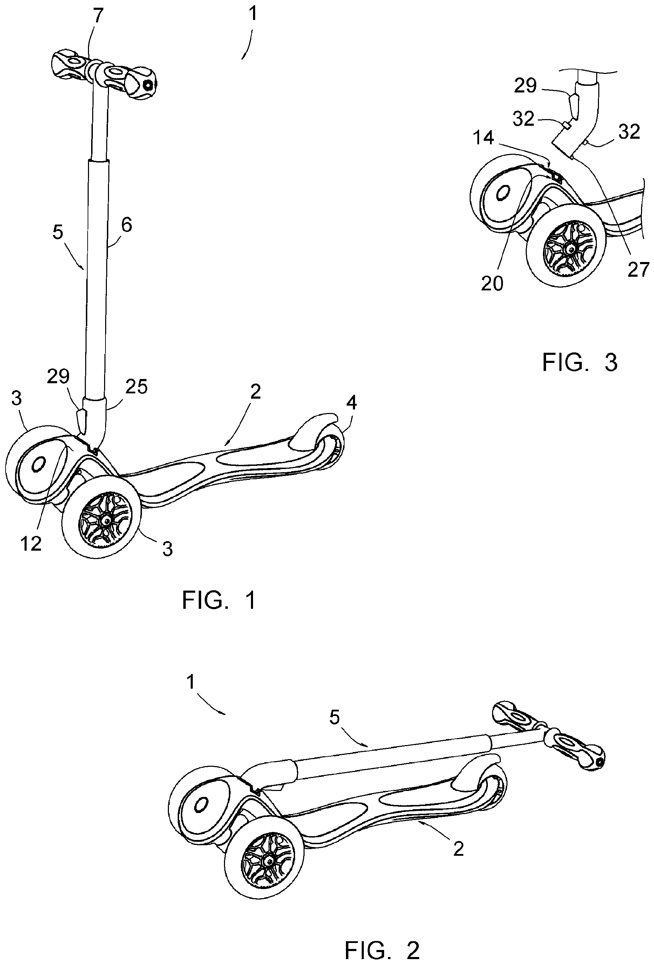

Les figures 1 et 2 représentent un engin à roues 1, notamment pour enfants, utilisable principalement en tant que trottinette mais pouvant également adopter d'autres configurations, comme décrit plus loin.

L'engin 1 comprend essentiellement une plate-forme 2 équipée de roues 3, 4 avant et arrière, et une colonne de direction 5, commandant le pivotement de la ou des roues avant 3. La colonne de direction 5 inclut une partie allongée 6 réglable en longueur, formée de deux tubes télescopiques, et un guidon 7. Elle est mobile entre la position de dépliage montrée sur la figure 1, dans laquelle elle fait saillie vers le haut depuis la plate-forme 2, en formant plus ou moins un angle droit avec celle-ci, et une position de repliage montrée sur la figure 2, dans laquelle elle s'étend le long de la plate-forme 2. Les parties générales de l'engin 1 qui viennent d'être mentionnées ci-dessus sont bien connues en elles-mêmes et ne seront donc pas décrites plus en détail.

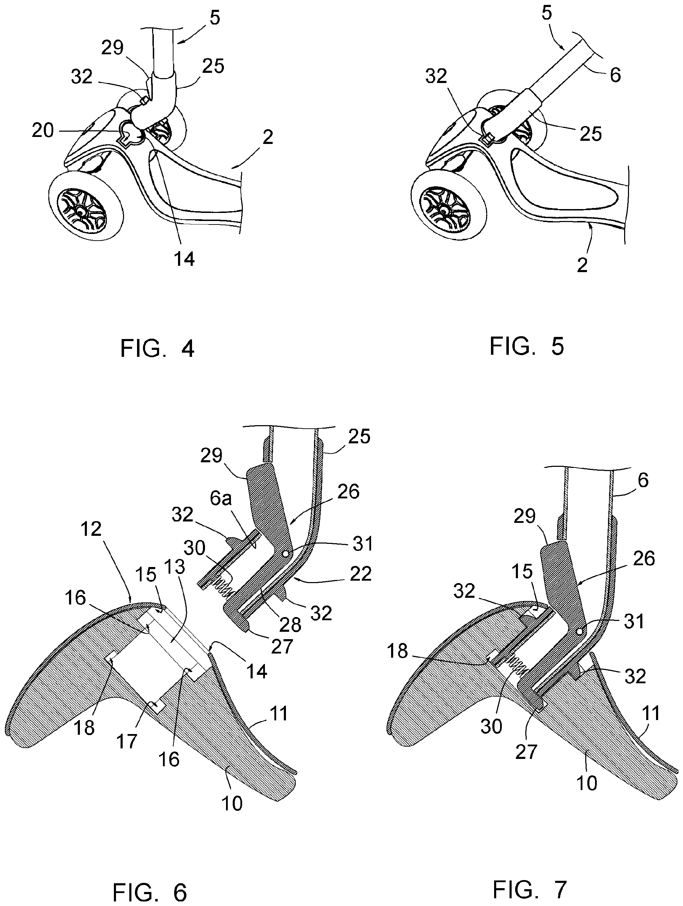

La plate-forme 2 présente une zone centrale sensiblement plane, formant un marchepied sur lequel se tient l'utilisateur lorsque l'engin 1 est utilisé. Comme cela est visible sur la figure 6, elle est constituée par un corps structurel 10 et par une coque d'habillage 11. Le corps 10 et la coque 11 forment un bossage avant 12. Dans le corps 10, au niveau de la zone arrière de ce bossage 12, est aménagé un puits 13 de forme générale cylindrique, dont l'axe est, dans un plan avant-arrière de la plate-forme 2, incliné selon un angle de 45° vers l'arrière de cette plate-forme. La coque 11 forme une ouverture 14 en regard de ce puits 13. Une gorge 15 est aménagée dans le corps 10 coaxialement au puits 13, à la partie supérieure de ce dernier et juste en dessous de la coque 11. Cette gorge 15 a un diamètre supérieur à celui de l'ouverture 14, de sorte qu'elle est délimitée par la coque 11 en partie supérieure.

La gorge 15 communique, au niveau de sa partie inférieure, avec deux logements radiaux 16 diamétralement opposés l'un à l'autre. Cette gorge 15 et ces logements 16 sont aptes à recevoir deux saillies 32 diamétralement opposées que comprend une embase 22 formée par la colonne de direction 5, comme décrit plus loin.

À la partie inférieure du puits 13, sont aménagés deux logements radiaux 17, 18 diamétralement opposés l'un à l'autre, qui débouchent dans le puits 13.

En outre, la coque 11 forme deux encoches radiales 20 débouchant dans l'ouverture 14 (une seule d'entre elle est plus particulièrement visible sur la figure 4). Les saillies 32 sont aptes à être engagées dans ces encoches 20, comme visible sur la figure 5, jusque dans les logements 16, comme visible sur la figure 7.

La colonne de direction 5 présente une portion coudée inférieure définissant, en dessous d'elle, une embase inférieure 22 cylindrique dont l'axe forme un angle de 135° avec l'axe selon lequel s'étend longitudinalement la partie allongée 6.

En référence plus particulièrement à la figure 6, il apparaît que l'embase inférieure 22 est formée par la partie inférieure 6a de la partie allongée 6 et par un manchon 25 qui recouvre cette partie inférieure. Ce manchon 25 recouvre également ladite portion coudée et la portion inférieure rectiligne de la partie 6 et est fixé à ces parties et portion.

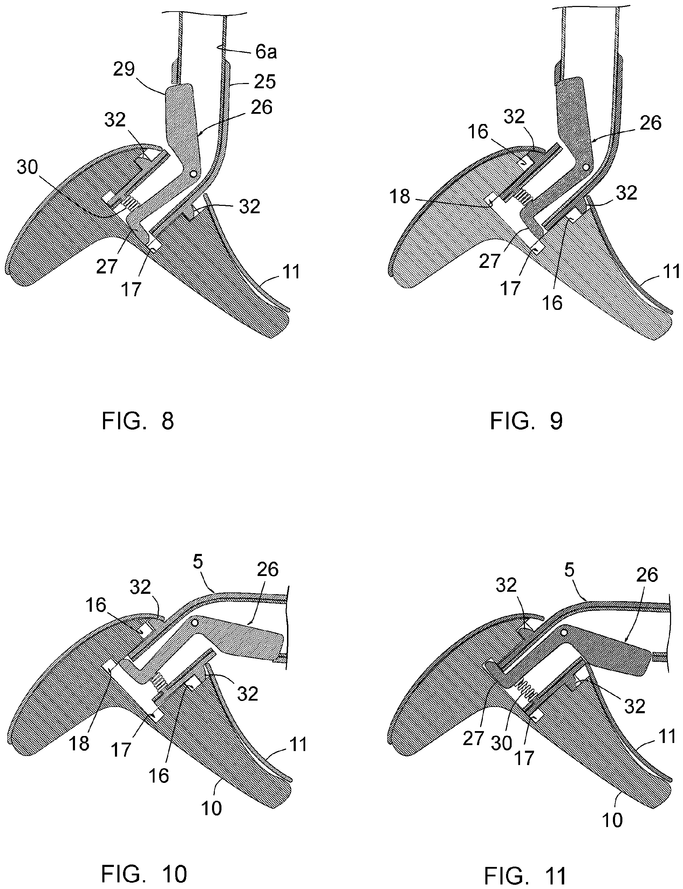

Ces mêmes parties et portion sont tubulaires et logent un organe de verrouillage 26 permettant de commander le montage/démontage et le verrouillage de la colonne de direction 5 sur la plate-forme 2. Cet organe 26 comprend un doigt de verrouillage inférieur 27, une branche intermédiaire 28 et une partie d'actionnement 29. Le doigt 27 forme un angle droit avec la branche 28 et est destiné à être engagé dans l'un ou l'autre des logements 17, 18 comme visible sur les figures 7 et 11.

La branche 28 est sollicitée par un ressort 30 s'étendant entre elle et ladite partie inférieure 6a, qui maintient normalement l'organe 26 dans la position montrée sur la figure 6, dans laquelle le doigt 27 fait saillie radialement au-delà de la paroi du manchon 25 et est apte à être engagé dans l'un ou l'autre des logements 17 ou 18. Le ressort 30 est cependant apte à être comprimé de telle sorte que le doigt 27 puisse être amené dans la position rétractée visible sur la figure 8, dans laquelle il ne fait pas saillie au-delà de la paroi du manchon 25 et est donc dégagé des logements 17 ou 18.

La partie d'actionnement 29 est coudée par rapport à la branche 28. Dans la position montrée sur la figure 6, elle fait saillie au travers d'une lumière aménagée dans la partie inférieure 6a et dans ladite portion coudée, ainsi que dans le manchon 25.

L'organe de verrouillage 26 est monté pivotant par rapport à cette partie inférieure 6a et ce manchon 25 au moyen d'un axe 31 chassé au travers de la partie inférieure 6a et du manchon 25, cet axe 31 se situant sensiblement entre la branche 28 et la partie d'actionnement 29.

Le manchon 25 comprend les deux saillies 32 précitées, solidaires de lui, qui sont diamétralement opposées l'une à l'autre et qui sont disposées sur un diamètre parallèle à l'axe selon lequel le doigt 27 est mobile par rapport à l'embase 22.

Comme cela se comprend en référence aux figures 3 et 4, la colonne de direction 5 est apte à être séparée de la plate-forme 2 et à être montée sur celle-ci par engagement de l'embase 22 dans le puits 13. Pour réaliser ce montage, comme visible sur la figure 5, la colonne de direction 5 est placée dans une position intermédiaire entre les positions de dépliage et de repliage, puis une action manuelle est exercée sur la partie d'actionnement 29 de façon à amener le doigt 27 dans la position rétractée précitée, et l'embase 22 est engagée dans le puits 13. Les saillies 32 sont, dans cette même position intermédiaire, placées en regard des encoches 20 ; elles sont engagées au travers de ces dernières, puis dans la gorge 15 et dans les logements 16 comme visible sur la figure 7. L'action sur la partie d'actionnement 29 peut être relâchée dès l'engagement des saillies 32 dans les encoches 20. La colonne de direction est pivotée soit vers la position de dépliage (figure 7), soit vers la position de repliage (figure 11), et, lorsque l'une ou l'autre de ces positions est atteinte, le doigt 27, sous l'action du ressort 30, pénètre dans le logement 17 ou le logement 18 selon le cas, verrouillant ainsi la colonne de direction 5 dans l'une ou l'autre de ces positions.

Pour passer de la position de dépliage visible sur la figure 7 à la position de repliage visible sur la figure 11, l'utilisateur exerce une pression sur la partie d'actionnement 29 de façon à amener l'organe de verrouillage 26 dans la position rétractée montrée sur la figure 8. En maintenant cette pression, il exerce une traction axiale sur l'embase 22 de façon à extraire les saillies 32 des logements 16 et amener ces saillies dans la gorge 15, comme montré sur la figure 9. Dans cette position, le doigt 27 est amené au-dessus du logement 17, de sorte que le maintien de ladite pression sur la partie d'actionnement 29 devient inutile, et les saillies 32 viennent en butée contre la coque 11, faisant qu'une extraction non souhaitée de l'embase 22 hors du puits 13 ne peut se produire. La colonne de direction 5 est alors pivoté jusqu'à la position de repliage montrée sur la figure 10, jusqu'à ce que les saillies 32 tombent dans les logements 16 respectifs ; l'embase 22 est ainsi amenée dans la position abaissée montrée sur la figure 11, dans laquelle le doigt 27 est placé en regard du logement 18 et s'engage dans ce logement sous la sollicitation du ressort 30, ce qui verrouille la colonne de direction 5 dans cette position de repliage.

Il apparaît ainsi de ce qui précède que l'invention fournit un engin 1 présentant, pour ce qui concerne le montage/démontage de la colonne 5, les avantages déterminants d'avoir une structure relativement simple, de ne pas présenter de parties exposées à l'encrassement, et de ne pas comprendre de parties risquant d'être relativement agressives en cas de chute.

Le fonctionnement de l'engin 1 pour le passage de la colonne de direction 5 de la position de dépliage à la position de repliage, et inversement, est très facile et très intuitif pour un utilisateur.

En outre, grâce à la possibilité de démontage facile et rapide de la colonne de direction 5, l'engin 1 peut être utilisé sans colonne de direction 5, pour former une sorte de planche à roulettes ; la plate-forme 2 peut également être combinée à d'autres éléments, notamment à un siège amovible solidaire d'une embase apte à être engagée dans le puits 13 et donc à être montée sur la plate-forme ; ce siège peut être chevauché par un enfant, de sorte que la plate-forme peut ainsi être transformée en une sorte de cheval à roulettes, ou, si le siège est relié à des poignées avant, en une sorte de "mini-moto".

## Revendications

1. Engin (1) à roues, notamment pour enfants, équipé de roues avant et arrière (3, 4) et comprenant une plate-forme (2) formant un marchepied et une colonne de direction (5) ; la colonne de direction (5) est mobile entre une position de dépliage, dans laquelle elle fait saillie vers le haut depuis la plate-forme (2), et une position de repliage, dans laquelle elle s'étend le long de la plate-forme (2) ; l'engin (1) comprend un mécanisme (16, 17, 18 ; 27, 32) de verrouillage de la colonne de direction (5) dans lesdites positions de dépliage et de repliage ;
**caractérisé en ce que** :
- la plate-forme (2) comprend un puits (13) de forme générale cylindrique dont l'axe est contenu dans un plan avant-arrière de la plate-forme (2) et est incliné vers l'arrière de cette plate-forme en formant un angle de 30° à 60° avec le plan dans lequel s'étend le marchepied ;
- la colonne de direction (5) présente une portion coudée inférieure, reliée à une embase cylindrique (22) destinée à être engagée dans le puits (13) avec capacité de pivotement dans ce puits (13), l'axe de cette embase (22) formant, avec l'axe selon lequel s'étend longitudinalement le reste de la colonne de direction (5), un angle complémentaire à 180° avec l'angle que forme l'axe du puits (13) ; et
- le mécanisme de verrouillage comprend des premiers moyens (16, 17 ; 27, 32) de blocage angulaire de l'embase (22) dans le puits (13), dans la position angulaire de cette embase (22) dans laquelle la colonne de direction (5) est en position de dépliage, et des deuxièmes moyens (16, 18 ; 27, 32) de blocage angulaire de l'embase (22) dans le puits (13), dans la position angulaire de cette embase (22) dans laquelle la colonne de direction (5) est en position de repliage.

2. Engin (1) selon la revendication 1, **caractérisé en ce que** l'angle que forme l'axe du puits (13) avec le plan dans lequel s'étend le marchepied que constitue la plateforme (3) est de 45°, et l'angle que forme l'axe de l'embase (22) avec l'axe selon lequel s'étend longitudinalement le reste de la colonne de direction (5) est de 135°.

3. Engin (1) selon la revendication 1 ou la revendication 2, **caractérisé en ce qu'**il comprend un mécanisme de montage/démontage permettant le montage et le démontage de la colonne de direction (5) par rapport à la plate-forme (2), ce mécanisme comprenant :
- une gorge (15) aménagée dans la paroi de la plate-forme (2) délimitant le puits (13), coaxialement à ce puits (13) ;
- au moins une saillie radiale (32) aménagée sur l'embase (22), apte à être engagée dans ladite gorge (15) et à coulisser dans cette dernière lors du mouvement de la colonne de direction (5) entre les positions précitées de dépliage et de repliage ; et
- une entrée (20) permettant l'engagement de ladite saillie (32) dans ladite gorge (15) lors de l'engagement de l'embase (22) dans le puits (13), cette entrée (20) étant située à distance des positions angulaires qu'occupe l'embase (22) dans le puits (13) lorsque la colonne de direction (5) est dans l'une ou l'autre des positions précitées de dépliage et de repliage.

4. Engin (1) selon la revendication 3, **caractérisé en ce que** :
- les premiers moyens de blocage angulaire de l'embase (22) dans le puits (13) sont constitués par :
- un premier logement radial (17) aménagé dans la plate-forme (2), débouchant dans le puits (13), et
- un doigt de verrouillage (27) mobile entre une position d'engagement dans ce premier logement (17), dans laquelle il verrouille la colonne de direction (5) dans ladite position de dépliage, et une position de dégagement vis-à-vis de ce premier logement (17), dans laquelle il libère le pivotement de la colonne de direction (5) ; le doigt de verrouillage (27) est associé à un ressort (30) le sollicitant dans ladite position d'engagement ;
- les deuxièmes moyens de blocage angulaire de l'embase (22) dans le puits (13) sont constitués par :
- un deuxième logement radial (18) aménagé dans la plate-forme (2) à l'opposé du premier logement (17), débouchant dans le puits (13), et
- le doigt de verrouillage (27), mobile radialement entre une position d'engagement dans ce deuxième logement (18), dans laquelle il verrouille la colonne de direction (5) dans ladite position de repliage, et une position de dégagement vis-à-vis de ce deuxième logement (18), dans laquelle il libère le pivotement de la colonne de direction (5) ;
- ladite gorge (15) communique, au niveau de son fond, avec un troisième logement (16) et un quatrième logement (16) diamétralement opposés l'un par rapport à l'autre, ledit troisième logement (16) étant apte à recevoir ladite saillie (32) dans ladite position de dépliage et ledit quatrième logement (16) étant apte à recevoir ladite saillie (32) dans ladite position de repliage ;
l'embase (22) étant apte à adopter deux positions axiales dans le puits (13), à savoir :
- une première position axiale, inférieure, dans laquelle ladite saillie (32) est engagée dans l'un ou l'autre desdits troisième et quatrième logements (16) et ledit doigt de verrouillage (27) se situe au même niveau que ledit premier logement (17) ou ledit deuxième logement (18), et
- une deuxième position axiale, supérieure, dans laquelle ladite saillie (32) est dégagée de ce troisième ou quatrième logement (16) et ledit doigt de verrouillage (27) est décalé axialement par rapport audit premier logement (17) et audit deuxième logement (18).

5. Engin (1) selon la revendication 4, **caractérisé en ce que** le doigt de verrouillage (27) est solidaire d'un organe de verrouillage (26) coudé, installé à l'intérieur de la partie inférieure de la colonne de direction (5), cet organe de verrouillage (26) étant monté pivotant sur cette colonne de direction (5) entre lesdites positions d'engagement et de dégagement du doigt de verrouillage (27), et présentant une partie d'actionnement (29) accessible à un utilisateur, au travers d'une lumière aménagée dans la colonne de direction (5).

## Patentansprüche

1. Radfahrzeug (1), insbesondere für Kinder, mit Vorder- und Hinterrädern (3, 4) ausgestattet und mit einer Plattform (2), die ein Trittbrett und eine Lenksäule (5) bildet; die Lenksäule (5) ist bewegbar zwischen einer Entfaltungsposition, in der sie von der Plattform (2) nach oben vorsteht, und einer Faltposition, in der sie sich entlang der Plattform (2) erstreckt; das Gerät (1) weist einen Mechanismus (16, 17, 18, 27, 32) zum Verriegeln der Lenksäule (5) in den Entfaltungs- und Faltpositionen auf;
**dadurch gekennzeichnet, dass**:
- die Plattform (2) weist einen Schacht (13)von allgemein zylindrischer Form auf, deren Achse in einer Vorder-Rückseite-Ebene der Plattform (2) enthalten ist und in Richtung der Rückseite dieser Plattform geneigt ist, indem ein Winkel von 30 ° bis 60 ° mit der Ebene, in der sich das Trittbrett erstreckt;
- die Lenksäule (5) weist einen unteren gebogenen Abschnitt auf, der mit einer zylindrischen Basis (22) verbunden ist, die dazu bestimmt ist, in diese Mulde (13) schwenkbar zu sein, diejenige zylindrischen Basis (22) bildet mit der Achse, entlang der sich der Rest der Lenksäule (5) in Längsrichtung erstreckt, einen komplementären Winkel von 180 ° mit dem Winkel, den die Achse des Schachtes (13) bildet; und
- der Verriegelungsmechanismus weist ersten Mitteln (16, 17; 27, 32) zum winkligen Blockieren der Basis (22) in dem Schacht (13)auf, in der Winkelposition dieser Basis (22), in der die Lenksäule in einer Entfaltungsposition und zweiten Mitteln (16,18; 27,32) zum winkligen Blockieren der Basis (22) in dem Schacht (13)in der Winkelposition dieser Basis (22), in der die Lenksäule ist in einer klappbaren Position.

2. Gerät (1) nach Anspruch 1, **dadurch gekennzeichnet, dass** der von der Achse des Schachtes (13) gebildete Winkel mit der Ebene, in der sich das die Plattform (3) bildende Trittbrett erstreckt, 45 ° beträgt und der Winkel durch die Achse der Basis (22) mit der Achse, gemäß der sich der Rest der Lenksäule (5) in Längsrichtung erstreckt, beträgt 135 °.

3. Gerät (1) nach Anspruch 1 oder 2, **dadurch gekennzeichnet, dass** es einen Montage- / Demontagemechanismus umfasst, der die Montage und Demontage der Lenksäule (5) in Bezug auf die Plattform (2) erlaubt, diese Mechanismus umfassend :
- eine in der Wand der Plattform (2) ausgebildete Nut (15), die den Schacht (13) koaxial zu diesem Schacht (13) begrenzt;
- mindestens einen an der Basis (22) angebrachten radialen Vorsprung (32), der in die Nut (15) eingreifen wird und während der Bewegung der Lenksäule (5) zwischen den vorgenannten Entfaltung und Faltpositionen ; und
- einen Einlass (20), der den Eingriff des Vorsprungs (32) in die Nut (15) während des Eingreifens der Basis (22) in den Schacht (13) erlaubt, wobei dieser Einlass (20) von den Winkelpositionen der Basis (22) in dem Schacht (13) besetzt entfernt wird, wenn die Lenksäule (5) in einer der zuvor genannten Entfaltungs- und Faltpositionen ist.

4. Gerät (1) nach Anspruch 3, **dadurch gekennzeichnet, dass**:
- die ersten Mittel zum winkelmäßigen Blockieren der Basis (22) in dem Schacht (13)werden gebildet durch:
- eine erste radiale Aufnahme (17), die in der Plattform (2) ausgebildet ist und sich in den Schacht (13) öffnet, und
- einen Verriegelungsfinger (27), der zwischen einer Eingriffsposition in diese erste Aufnahme (17), in der er die Lenksäule (5) in der Entfaltungsposition verriegelt, und einer Entkupplungsposition von dieser ersten Aufnahme (17) das Schwenken der Lenksäule (5) freigibt; der Verriegelungsfinger (27) ist mit einer Feder (30) verbunden, die ihn in die Eingriffsposition drückt;
- die zweiten Mittel zum winkelmäßigen Blockieren der Basis (22) in dem Schacht (13)werden gebildet durch:
- eine zweite radiale Aufnahme (18), die in der Plattform (2) gegenüber der ersten Aufnahme (17) ausgebildet ist und sich in den Schacht (13) öffnet, und
- wobei der Verriegelungsfinger (27) radial bewegbar zwischen einer Eingriffsposition in diese zweite Aufnahme (18), in der er die Lenksäule (5) in dieser Faltposition verriegelt, und einer Ausgriffposition von dieser zweiten Aufnahme (18) ist, in der er die Verschwenkung der Lenksäule (5) freigibt;
- die Nut (15) ist an ihrem Boden mit einer dritten Aufnahme (16) und einer vierten Aufnahme (16) diametral gegenüberliegend verbunden, wobei die dritte Aufnahme (16) in der Lage ist, den Vorsprung (32) in die Entfaltposition aufzunehmen und die vierte Aufnahme (16) in der Lage ist, den Vorsprung (32) in die Faltposition aufzunehmen;
wobei die Basis (22) zwei axiale Positionen in dem Schacht (13)einnehmen kann, d. h.:
- eine erste axiale untere Position, in der der Vorsprung (32) entweder in die dritte oder die vierte Aufnahme (16) eingreift und der Verriegelungsfinger (27) auf derselben Höhe wie die erste Aufnahme (17) oder die zweite Aufnahme (18) und
- eine zweite axiale obere Position, in der der Vorsprung (32) außer Eingriff mit dieser dritten oder vierten Aufnahme (16) ist und der Verriegelungsfinger (27) bezüglich der ersten Aufnahme (17) und der zweiten Aufnahme (18).

5. Gerät (1) nach Anspruch 4, **dadurch gekennzeichnet, dass** der Verriegelungsfinger (27) an einem im unteren Bereich des Inneren der Lenksäule (5) gebogenen Verriegelungselement (26) angebrachten kraftschlüssig verbunden ist, diesen Verriegelungselement (26) an der Lenksäule (5) zwischen der Einrück- und der Ausrückposition des Verriegelungsfingers (27) schwenkbar angebracht ist und einen für einen Benutzer zugänglichen Betätigungsabschnitt (29) durch ein in der Lenksäule (5) hergestelltes Öffnung aufweist.

## Claims

1. Wheeled vehicle (1), notably for children, equipped with front and rear wheels (3, 4) and comprising a platform (2) forming a footboard and a steering column (5); the steering column (5) is movable between an unfolding position, in which it protrudes upwards from the platform (2), and a folding position, in which it extends along the platform (2); the vehicle (1) comprises a mechanism (16, 17, 18; 27, 32) for locking the steering column (5) in said unfolding and folding positions;
**characterized in that**:
- the platform (2) comprises a well (13) of a general cylindrical shape, the axis of which is contained in a front-rear plane of the platform (2) and is tilted towards the rear of this platform by forming an angle from 30° to 60° with the plane in which extends the footboard;
- the steering column (5) has a lower bent portion, connected to a cylindrical base (22) intended to be engaged into the well (13) with pivoting capability in this well (13), the axis of this base (22) forming, with the axis along which the remainder of the steering column (5) extends longitudinally, a complementary angle to 180° with the angle which the axis of the well (13) forms; and
- the locking mechanism comprises first means (16, 17; 27, 32) for angularly blocking the base (22) in the well (13), in the angular position of this base (22) in which the steering column (5) is in an unfolding position, and second means (16, 18; 27, 32) for angularly blocking the base (22) in the well (13), in the angular position of this base (22) in which the steering column (5) is in a folding position.

2. The vehicle (1) according to claim 1, **characterized in that** the angle formed by the axis of the well (13) with the plane in which extends the footboard making up the platform (3) is 45°, and the angle formed by the axis of the base (22) with the axis according to which extends the remainder of the steering column (5) longitudinally is 135°.

3. The vehicle (1) according to claim 1 or claim 2, **characterized in that** it comprises a mounting/disassembling mechanism allowing mounting and disassembling of the steering column (5) with respect to the platform (2), this mechanism comprising:
- a groove (15) made in the wall of the platform (2) delimiting the well (13), co-axially with this well (13);
- at least one radial protrusion (32) made on the base (22), able to be engaged into said groove (15) and to slide in the latter during the movement of the steering column (5) between the aforementioned unfolding and folding positions; and
- an inlet (20) allowing engagement of said protrusion (32) into said groove (15) during the engagement of the base (22) into the well (13), this inlet (20) being located at a distance from the angular positions occupied by the base (22) in the well (13) when the steering column (5) is in either one of the aforementioned unfolding and folding positions.

4. The vehicle (1) according to claim 3, **characterized in that**:
- the first means for angularly blocking the base (22) in the well (13) are formed by:
- a first radial accommodation (17) made in the platform (2), opening into the well (13), and
- a locking finger (27) movable between an engagement position into this first accommodation (17), in which it locks the steering column (5) in said unfolding position, and a disengagement position from this first accommodation (17), in which it releases the pivoting of the steering column (5); the locking finger (27) is associated with a spring (30) urging it into said engagement position;
- the second means for angularly blocking the base (22) in the well (13) are formed by:
- a second radial accommodation (18) made in the platform (2) opposite to the first accommodation (17), opening into the well (13), and
- the locking finger (27), radially movable between an engagement position into this second accommodation (18), in which it locks the steering column (5) in said folding position, and a disengagement position from this second accommodation (18), wherein it releases the pivoting of the steering column (5);
- said groove (15) communicates, at its bottom, with a third accommodation (16) and a fourth accommodation (16) diametrically opposite to each other, said third accommodation (16) being able to receive said protrusion (32) in said unfolding position and said fourth accommodation (16) being able to receive said protrusion (32) into said folding position;
the base (22) being able to adopt two axial positions in the well (13), i.e.:
- a first axial lower position in which said protrusion (32) is engaged into either one of said third and fourth accommodations (16) and said locking finger (27) is located at the same level as said first accommodation (17) or said second accommodation (18), and
- a second axial upper position, wherein said protrusion (32) is disengaged from this third or fourth accommodation (16) and said locking finger (27) is axially shifted with respect to said first accommodation (17) and to said second accommodation (18).

5. The vehicle (1) according to claim 4, **characterized in that** the locking finger (27) is secured to a bent locking member (26), installed inside the lower portion of the steering column (5), this locking member (26) being pivotally mounted on this steering column (5) between said engagement and disengagement positions of the locking finger (27), and having an actuation portion (29) accessible to a user, through a lumen made in the steering column (5).
